# EUROPÄISCHE PATENTSCHRIFT

(11) **EP 3 006 903 B1**
(45) Veröffentlichungstag und Bekanntmachung des Hinweises auf die Patenterteilung: **07.12.2016**
(21) Anmeldenummer: 14188387.6
(22) Anmeldetag: 10.10.2014
(51) Int. Cl.: F15D 1/00, G01F 1/32, G01F 15/00, G01F 1/66

(54) **Durchflussmessvorrichtung zum Messen eines Parameters einer aus einem Fluid gebildeten Strömung**
Flow measuring device for measuring a parameter of a fluid flow
Débitmètre destiné à mesurer un paramètre d'un flux formé par un fluide

(43) Veröffentlichungstag der Anmeldung: 13.04.2016
(73) Patentinhaber: SICK Engineering GmbH, 01458 Ottendorf-Okrilla (DE)
(72) Erfinder: Ehrlich, Andreas, 01129 Dresden (DE); Künzelmann, Mario, 01187 Dresden (DE); Nerowski, Alexander, 01277 Dresden (DE)
(74) Vertreter: Ludewigt, Christoph

(56) Entgegenhaltungen:
- EP-A1- 0 741 283
- EP-A1- 1 876 427
- EP-A2- 1 775 560
- DE-U1-202010 015 194

## Beschreibung

Die Erfindung betrifft eine Durchflussmessvorrichtung zum Messen eines Parameters einer aus einem Fluid gebildeten Strömung, das in einer Leitung in einer Hauptströmungsrichtung strömt, gemäß dem Oberbegriff des Anspruchs 1.

Um die Durchflussgeschwindigkeit des Fluids in der Leitung, vorzugsweise einem Rohr, zu bestimmen, gibt es neben verschiedenen physikalischen Prinzipien den Einsatz von Ultraschallwellen, die in die Leitung ausgesendet werden. Mittels des Differenzlaufzeitverfahrens können Parameter des strömenden Fluids und somit der Strömung bestimmt werden.

Hierbei werden Ultraschallwellen von einem Paar Ultraschalleinrichtungen, insbesondere Ultraschallwandler, ausgesandt und empfangen, wobei die Ultraschalleinrichtungen einander gegenüber an einer Wandung der Leitung an den Enden eines Messpfads schräg zur Hauptströmungsrichtung bzw. Strömung des Fluids angeordnet sind.

Die durch das Fluid transportierten Ultraschallwellen werden in Strömungsrichtung beschleunigt und gegen die Strömungsrichtung abgebremst. Die resultierende Laufzeitdifferenz wird mit geometrischen Größen zu einer mittleren Fluidgeschwindigkeit verrechnet, aus der die Parameter des strömenden Fluids, wie z. B. Betriebsvolumenstrom oder dergleichen, bestimmt werden.

Ein wichtiges und anspruchsvolles Anwendungsfeld sind Gaszähler für Erdgaspipelines, wo wegen der immensen beförderten Gasmengen und des Rohstoffwerts schon geringste Abweichungen in der Messgenauigkeit deutlich merklichen Werten entsprechen. Oben genannte Durchflussmessvorrichtungen werden in diesem Bereich der Großgasmengenmessung auf Grund ihrer Genauigkeit, Wartungsfreiheit und Selbstdiagnosemöglichkeiten bei Gastransport und Gaslagerung zunehmend eingesetzt.

Da ein Ultraschallmesspfad die Strömungsgeschwindigkeit nur an definierten Positionen abtastet, wird letztlich die mittlere Strömungsgeschwindigkeit über den gesamten Strömungsquerschnitt angenähert. Hohe Genauigkeiten lassen sich daher nur erzielen, wenn die Strömung gut reproduzierbar ist, beziehungsweise ein ungestörtes Strömungsprofil aufweist oder wenn eine Vielzahl von Messpfaden die Unregelmäßigkeiten aufzulösen vermag. Um hohe Genauigkeiten zu erreichen, kann das Strömungsprofil gezielt beeinflusst werden, beispielsweise über Strömungsgleichrichter oder lange, gerade Einlaufstrecken. Strömungsgleichrichter sind aber nur begrenzt in der Lage, die Strömung zu vergleichsmäßigen, und lange, gerade Einlaufstrecken benötigen viel Bauraum und stehen nicht immer zur Verfügung. Eine Messung auf zahlreichen Messpfaden erfordert ein entsprechend komplexes Messgerät mit hohen Herstellkosten.

Neben der Ultraschallmesstechnik werden mechanische Turbinenradzähler oder Drehkolbenzähler zur Gasmessung eingesetzt.

Für mechanische Messung ist die Ausbildung der Strömung weitgehend gleichgültig, so dass die Störung der ursprünglichen Strömung und Strömungsrichtung ohne Weiteres in Kauf genommen werden kann. Bei Ultraschallzählern ist man dagegen stets bestrebt, sie nur nach einer langen und vorzugsweise geraden Beruhigungsstrecke zu montieren, so dass die Strömung sich vergleichsmäßigen kann, und dies durch Strömungsgleichrichter noch zu unterstützen. Weiterhin werden auch die UItraschallzähler selbst so montiert und ausgebildet, dass das Fluid möglichst frei und ungestört strömen kann.

EP 0 741 283 A1 offenbart einen Ultraschall-Messwertgeber zur Bestimmung der Durchflussmenge, der durch ein Rohrsystem strömenden Flüssigkeit. Der Ultraschall-Messwertgeber weist einen Einlassstutzen und einen Auslassstutzen auf, wobei der Ultraschall-Messwertgeber in die Hauptströmung der zu vermessenden Flüssigkeit eingesetzt wird, so dass Ein- und Auslassstutzen eine Messwertgeberachse definieren. Ferner ist eine Blende vor dem Messrohr in den Einlassstutzen derart eingesetzt, so dass eine Strömungsverteilung vor dem Messrohr vorhanden ist, die unabhängig vom Einfluss der äußeren Verrohrung ist.

EP 1 876 427 A1 offenbart einen Ultraschall-Durchflussmesser für ein strömendes Medium, der einen Einlaufbereich und einen Auslaufbereich aufweist, wobei zwischen den beiden Bereichen eine Durchflussmessstrecke vorgesehen ist. Eine Turbulatorkomponente ist am Einlaufbereich des Ultraschall-Durchflussmessers vorgesehen, so dass das zu erfassende Medium mit einem Drall strömt oder eine Verwirbelung aufweist. Hierdurch werden etwa gleich bleibende gestörte Strömungsverhältnisse innerhalb der Durchflussmessstrecke erzwungen, so dass der Durchflussmesser abgeglichen werden kann.

Um diese Einschränkungen zu vermeiden, offenbart EP 2 375 224 A1 bzw. DE 20 2010 015 194 U1 eine Durchflussmessvorrichtung gemäß dem Oberbegriff des Patentanspruchs 1, bei der das Fluid aus der Hauptströmungsrichtung in der Leitung in einen beispielsweise stutzenartigen Aufsatz abgelenkt wird. Dies wird durch eine spezielle Strömungsführung erreicht, welche einen 180° Bogen enthält, der wiederum mit einem Winkel von 45° um dessen Hochachse gedreht ist. Auf diese Weise kann die Strömung unabhängig von den Leitungsabschnitten stromauf der Durchflussmessvorrichtung und damit sehr reproduzierbar vermessen werden.

Hierdurch kann eine kompakte Durchflussmessvorrichtung mit einer im Wesentlichen hohen Vorstörungsfestigkeit des Strömungsfeldes erzielt werden.

Bei der Durchströmung der einzelnen Bogenabschnitte erfährt das Fluid mehrfache Strömungsumlenkungen, die eine bzw. mehrfache Ablösung/Ablösungen des Fluids von der Leitungswand, sogenannte Ablöseblasen, bewirken können. Diese Ablöseblasen reagieren hochsensitiv auf vorgelagerte Änderungen eines Strömungsfeldes und können das nachgelagerte Strömungsfeld beeinflussen.

Es ist eine Aufgabe der Erfindung, eine Durchflussmessvorrichtung gemäß dem Oberbegriff des Anspruchs 1 derart zu verbessern, dass eine verbesserte Reproduzierbarkeit einer Messung von verschiedenen Exemplaren der baugleichen Durchflussmessvorrichtung und somit eine Reduzierung der Sensibilität derselben gegenüber den Auswirkungen der Ablösungen in der Strömung gewährbar ist.

Diese Aufgabe wird erfindungsgemäß gelöst durch eine Durchflussmessvorrichtung mit den Merkmalen des Anspruchs 1.

Hierbei umfasst die Durchflussmessvorrichtung zum Messen eines Parameters einer aus einem Fluid gebildeten Strömung, das in einer Leitung in einer Hauptströmungsrichtung strömt, einen ersten Leitungsabschnitt zum Leiten des Fluids aus der Hauptströmungsrichtung; einen zweiten Leitungsabschnitt zum Leiten des Fluids zurück in die Hauptströmungsrichtung; einen Leitungsverbindungsabschnitt zum Verbinden des ersten Leitungsabschnitts mit dem zweiten Leitungsabschnitt; zumindest eine Ultraschalleinrichtung zum Aussenden und/oder Empfangen von Ultraschallwellen; und eine Auswerteeinheit zum Durchführen einer Laufzeitdifferenzmessung und zum Bestimmen des Parameters, wobei der Leitungsverbindungsabschnitt als ein 180°-Bogen ausgebildet ist und zusammen mit einem ersten und einem zweiten geraden Leitungsstück einen U-förmigen Kanal bildet, wobei das erste gerade Leitungsstück sich zwischen dem ersten Leitungsabschnitt und dem Leitungsverbindungsabschnitt und das zweite gerade Leitungsstück sich zwischen dem Leitungsverbindungsabschnitt und dem zweiten Leitungsabschnitt befindet, wobei zumindest eine Drallerzeugungseinheit zum Erzeugen eines Dralls, die nach dem ersten Leitungsabschnitt und vor einem Gleichrichter derart angeordnet ist, dass der erzeugte Drall in eine Richtung gerichtet ist, die entgegengesetzt zu einer Richtung eines nach dem ersten Leitungsabschnitt und vor der Drallerzeugungseinheit vorhandenen Dralls ist, und wobei die Drallerzeugungseinheit ausgebildet ist, das Fluid gegen die Innenwand des ersten geraden Leitungsstückes zu lenken.

Die erfindungsgemäße Lösung hat den Vorteil, dass durch eine einfache und kostengünstige Änderung innerhalb der Durchflussmessvorrichtung eine Reproduzierbarkeit der Strömung vor der Messstelle verbessert wird. Zusätzlich ist eine verbesserte Vergleichmäßigung des Strömungsfeldes einfach erzielbar.

Gemäß einem bevorzugten Ausführungsbeispiel umfasst die Drallerzeugungseinheit ein zylindrisches Gehäuse und eine Mehrzahl von im Innern des Gehäuses angeordneten Schaufeln, wobei die Schaufeln gegenüber dem Gehäuse feststehend sind.

Gemäß einem weiteren bevorzugten Ausführungsbeispiel ist die Ultraschalleinrichtung in Strömungsrichtung des Fluids nach der Drallerzeugungseinheit angeordnet.

Gemäß einem weiteren bevorzugten Ausführungsbeispiel sind die Drallerzeugungseinheit im ersten geraden Leitungsstück und die Ultraschalleinrichtung im zweiten geraden Leitungsstück angeordnet.

Gemäß einem weiteren bevorzugten Ausführungsbeispiel ist der U-förmige Kanal von dem ersten Leitungsabschnitt und dem zweiten Leitungsabschnitt lösbar befestigt. Hierdurch ist es vorteilhaft, den Teil der Durchflussmessvorrichtung mit der Drallerzeugungseinheit und der Ultraschalleinrichtung schnell und einfach von den rein fluidleitenden Teilen der Durchflussmessvorrichtung zu trennen, um die Drallerzeugungseinheit oder die Ultraschalleinrichtung gegebenenfalls auszutauschen.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung einer bekannten Durchflussmessvorrichtung im Betriebszustand;
- Fig. 1a: eine dreidimensionale Außenansicht der bekannten Durchflussmessvorrichtung gemäß der Figur 1;
- Fig. 2: eine dreidimensionale Längsschnittansicht entlang der Ebene A-A einer erfindungsgemäßen Durchflussmessvorrichtung ohne die Einbzw. Ausgangsabschnitte;
- Fig. 3: eine dreidimensionale Vorderansicht eines bevorzugten Ausführungsbeispiels einer erfindungsgemäßen Drallerzeugungseinheit; und
- Fig. 3a: eine dreidimensionale Rückansicht der Drallerzeugungseinheit gemäß Figur 3.

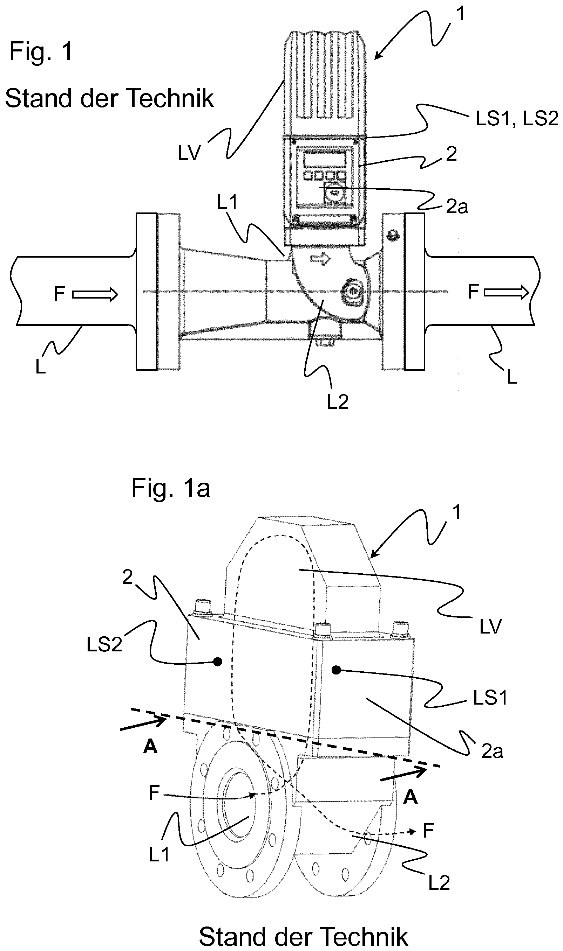

In der Figur 1 ist eine schematische Anordnung einer bekannten Durchflussmessvorrichtung 1 in einer Fluidleitung L gezeigt, um Parameter einer aus einem Fluid F gebildeten und in der Leitung L befindlichen Strömung im Betriebszustand zu bestimmen.

Die Durchflussmessvorrichtung 1 umfasst einen ersten Leitungsabschnitt L1 und einen zweiten Leitungsabschnitt L2. Der erste Leitungsabschnitt L1 leitet das anströmende Fluid F aus der Hauptströmungsrichtung in die Durchflussmessvorrichtung 1 ein und dient somit im Wesentlichen als Eingangsabschnitt der Durchflussmessvorrichtung 1. Der zweite Leitungsabschnitt L2 leitet das strömende Fluid F von der Durchflussmessvorrichtung 1 zurück in die Hauptströmungsrichtung in der Leitung L und dient somit im Wesentlichen als Ausgangsabschnitt der Durchflussmessvorrichtung 1.

Ein Leitungsverbindungsabschnitt LV dient dazu, den ersten Leitungsabschnitt L1 mit dem zweiten Leitungsabschnitt L2 zu verbinden. Hierbei ist der Leitungsverbindungsabschnitt LV vorzugsweise als ein 180°-Bogen ausgebildet und bildet zusammen mit einem ersten und einem zweiten geraden Leitungsstück LS1 und LS2, die nachfolgend noch näher beschrieben werden, einen U-förmigen Kanal der Durchflussmessvorrichtung 1.

Während des Flusses des Fluids F von der Hauptströmungsrichtung aus der Leitung L durch die Durchflussmessvorrichtung 1 und wieder zurück in die Hauptströmungsrichtung in der Leitung L werden die Parameter des Fluids F bzw. der Strömung durch zumindest eine Ultraschalleinrichtung 2, die sich auf einer gegenüberliegenden Seite zu einer dargestellten Auswerteeinheit 2a und an einer Innenwand des zweiten geraden Leitungsstücks LS2 befindet und Ultraschallwellen aussendet und/oder empfängt und deren Auswerteeinheit 2a eine Laufzeitdifferenzmessung durchführt, bestimmt. Die Ultraschalleinrichtung 2 ist insbesondere an dem zweiten geraden Leitungsstück LS2 des U-förmigen Kanals angeordnet, so dass sich vor einem sogenannten Messpfad, in dem die Ultraschalleinrichtung 2 vorgesehen ist, die Strömung des Fluids vergleichsmäßigen kann, um Störungen der Messung, insbesondere der Messgenauigkeit, zu minimieren.

Anhand der Figur 1a wird der Fluss des Fluids F durch die Durchflussmessvorrichtung 1 detaillierter beschrieben. Hierbei zeigt die Figur 1a eine dreidimensionale Außenansicht der bekannten Durchflussmessvorrichtung 1.

Anhand der Pfeillinien wird der Fluss des Fluids F durch die Durchflussmessvorrichtung 1 schematisch dargestellt.

In dem ersten Leitungsabschnitt L1 wird das Fluid F um 90° seitlich aus der in der Leitung L herrschenden Hauptströmungsrichtung gelenkt. Augenblicklich nach der Auslenkung wird das Fluid F senkrecht zu der Hauptströmungsrichtung nach oben in dem ersten geraden Leitungsstück LS1 geführt. Hierbei führt das Fluid F eine spiralförmige Bewegung ausgehend vom Eintritt in den ersten Leitungsabschnitt L1 bis zum Austritt aus dem ersten Leitungsabschnitt L1 aus.

Nach Durchströmen des ersten geraden Leitungsstücks LS1 wird das Fluid F in dem 180°-Bogen des Leitungsverbindungsabschnitts LV in die Gegenrichtung umgelenkt, in der es das zweite gerade Leitungsstück LS2 durchströmt, wobei das zweite gerade Leitungsstück LS2 parallel zu dem ersten geraden Leitungsstück LS1 angeordnet ist, so dass das erste und zweite gerade Leitungsstück LS1 und LS2 zusammen mit dem 180°-Bogen des Leitungsverbindungsabschnitts LV den U-förmigen Kanal der Durchflussmessvorrichtung 1 bilden.

Nach dem zweiten geraden Leitungsstück LS2 strömt das Fluid F in den zweiten Leitungsabschnitt L2 ein und wird ebenfalls in einer spiralförmigen Bewegung wieder zurück in die Hauptströmungsrichtung in die Leitung L eingeleitet.

Durch die mehrfache Umlenkung der Strömung des Fluids F in dem ersten Leitungsabschnitt L1 der Durchflussmessvorrichtung 1 und insbesondere durch die spiralförmige Bewegung des Fluids F nach dem Austritt desselben aus dem ersten Leitungsabschnitt L1 bildet sich ein Drall DR1 in der Strömung des Fluids F.

Die mehrfache Umlenkung und insbesondere der vorhandene Drall DR1 nach dem ersten Leitungsabschnitt L1 bewirkt insbesondere die Bildung einer nicht gezeigten Ablöseblase an der innenseitigen Innenwand des ersten Leitungsstücks LS1 direkt nach dem ersten Leitungsabschnitt L1 und an der innenseitigen Innenwand des zweiten Leitungsstücks LS2 direkt nach dem Leitungsverbindungsabschnitt LV.

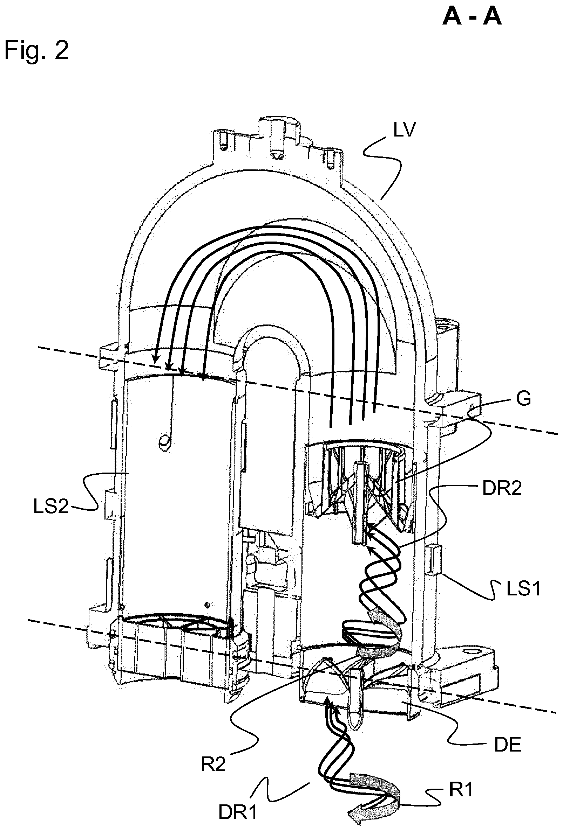

Wie in der Figur 2 gezeigt, wird erfindungsgemäß zumindest eine Drallerzeugungseinheit DE zum Erzeugen eines Dralls DR2 vor einem Gleichrichter G vorgesehen. Der Gleichrichter G dient u. a. als Drallbrecher und sorgt dafür, dass dort, wo die Messpfade aufgespannt sind, eine möglichst homogene Strömung vorherrscht. Hierbei zeigt die Figur 2 eine dreidimensionale Längsschnittansicht entlang der Ebene A-A der erfindungsgemäßen Durchflussmessvorrichtung 1 ohne die ersten und zweiten Leitungsabschnitte L1 und L2.

Gemäß dem gezeigten bevorzugten Ausführungsbeispiel ist die Drallerzeugungseinheit DE nach dem ersten Leitungsabschnitt L1 und vor dem Leitungsverbindungsabschnitt LV, insbesondere am Übergang zwischen dem ersten Leitungsabschnitt L1 und dem ersten geraden Leitungsstück LS1, vorgesehen.

Die Drallerzeugungseinheit DE ist erfindungsgemäß nach dem ersten Leitungsabschnitt L1 derart angeordnet, dass der erzeugte Drall DR2 in eine Richtung R2 gerichtet ist, die entgegengesetzt zu einer Richtung R1 des nach dem ersten Leitungsabschnitt L1 und vor der Drallerzeugungseinheit DE vorhandenen Dralls DR1 ist.

D. h. anschaulich in dem dargestellten bevorzugten Ausführungsbeispiel ist die Richtung R1 des nach dem ersten Leitungsabschnitt L1 vorhandenen Dralls DR1 im Uhrzeigersinn. Durch die erfindungsgemäße Anordnung der Drallerzeugungseinheit DE wird diese Richtung R1 des vorhandenen Dralls DR1 umgekehrt und in die entgegengesetzte Richtung gerichtet, so dass der erzeugte Drall DR2 eine Richtung R2 gegen den Uhrzeigersinn aufweist.

Hierdurch wird bzw. werden Ablöseblase/n verhindert bzw. beseitigt.

Bevorzugterweise ist die Ultraschalleinrichtung 2 in Strömungsrichtung des Fluids F nach der Drallerzeugungseinheit DE in dem zweiten geraden Leitungsstück LS2 angeordnet. Dadurch ist die Strömung entlang des Messpfades vor der Ultraschalleinrichtung 2 vorteilhafterweise vergleichmäßigt und von den das Messverhalten der Durchflussmessvorrichtung 1 störenden Ablösungen befreit bzw. reduziert.

Somit sind bevorzugterweise die Drallerzeugungseinheit DE im ersten geraden Leitungsstück LS1 und die Ultraschalleinrichtung 2 im zweiten geraden Leitungsstück LS2 angeordnet.

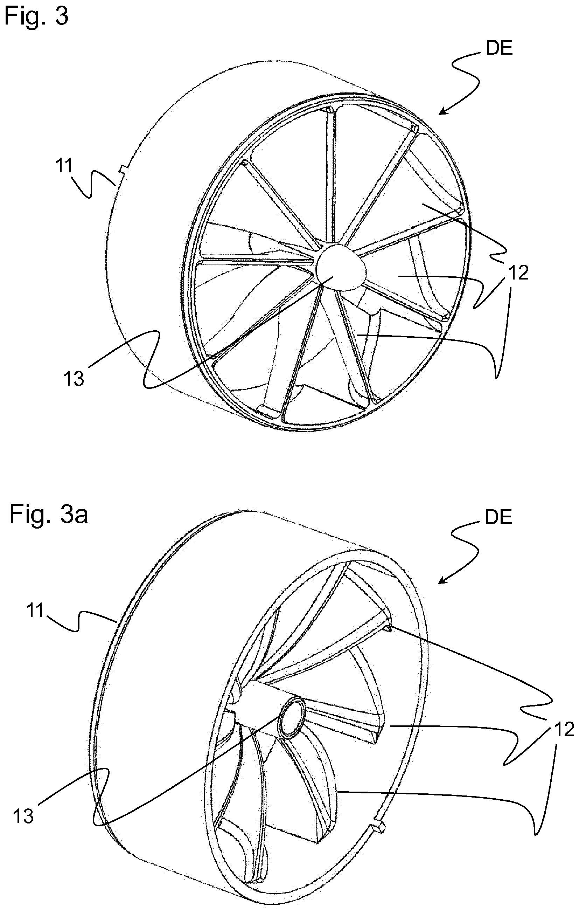

Die Drallerzeugungseinheit DE umfasst ein zylindrisches Gehäuse 11 und eine Mehrzahl von im Innern des Gehäuses 11 angeordneten Schaufeln 12, wie in den Figuren 3 und 3a gezeigt.

Hierbei sind die Schaufeln 12 gegenüber dem Gehäuse 11 feststehend, so dass die Schaufeln 12 den vorhandenen Drall DR1 der Strömung bei Austritt aus dem ersten Leitungsabschnitt L1 aufnimmt und entsprechend der Ausrichtung der Schaufeln 12 in die zu der ursprünglichen Richtung R1 entgegengesetzte Richtung R2 erfindungsgemäß umkehrt. Dadurch wird nach der Drallerzeugungseinheit DE der Drall DR2 mit der entgegengesetzten Richtung R2 erzeugt.

Die Schaufeln 12 sind in der Mitte des zylindrischen Gehäuses 11 durch eine Nabe 13 miteinander verbunden. Die Nabe 13 ragt von dem zylindrischen Gehäuse 11 in die Strömung des Fluids F hinein, so dass die Nabe 13 zuerst mit dem Fluid F in Kontakt kommen würde.

Somit entspricht im Wesentlichen die Nabe 13 mit den Schaufeln 12 einem Leitrad einer Turbine bzw. die Drallerzeugungseinheit DE fungiert als ein Drallgenerator.

Ferner ist in Abhängigkeit einer Strömungsbedingung des Fluids F in der Leitung L die Drallerzeugungseinheit DE ausgelegt. D. h. insbesondere auf Basis einer Durchflussrate, eines Druckes, eines Aggregatszustands des strömenden Fluids F und/oder einer Installation der Durchflussmessvorrichtung 1 in der Leitung L wird die entsprechende Drallerzeugungseinheit DE ausgelegt, so dass die Form der Schaufeln 12 und/oder die Anzahl der Schaufeln 12 ausgewählt werden.

Die Figur 3a zeigt eine dreidimensionale Rückansicht eines bevorzugten Ausführungsbeispiels einer erfindungsgemäßen Drallerzeugungseinheit DE, die neun Schaufeln 12 aufweisen, so dass das zylindrische Gehäuse 11 in neun Segmente unterteilt ist.

Die Anzahl der Schaufeln 12 und die Größe der Drallerzeugungseinheit DE ist vorteilhafterweise an die Größe der Durchflussmessvorrichtung 1 anpassbar.

Ferner ist gemäß einem bevorzugten Ausführungsbeispiel der, aus dem Leitungsverbindungsabschnitt LV und den beiden geraden ersten und zweiten Leitungsstücke LS1 und LS2 bestehende, U-förmige Kanal der Durchflussmessvorrichtung 1 von dem ersten Leitungsabschnitt L1 und dem zweiten Leitungsabschnitt L2 lösbar befestigt.

Dadurch kann der U-förmige Kanal der Durchflussmessvorrichtung 1 bzw. der das Strömungsprofil beeinflussende und messende Bereich der Durchflussmessvorrichtung 1 von den verschleissfreien ersten und zweiten Leitungsabschnitten L1 und L2 einfach getrennt werden, so dass eine Wartung, eine Reparatur oder ein Austausch des U-förmigen Kanals der Durchflussmessvorrichtung 1 einfach und kostengünstig durchgeführt werden können.

Weiterhin kann die Drallerzeugungseinheit DE auf einfache Art und Weise in die Durchflussmessvorrichtung 1 ein- bzw. ausgebaut werden.

### Bezugszeichenliste

- 1: Durchflussmessvorrichtung
- 2: Ultraschalleinrichtung
- 2a: Auswerteeinheit
- 11: zylindrisches Gehäuse
- 12: Schaufeln
- 13: Nabe
- DE: Drallerzeugungseinheit
- DR1: vorhandener Drall
- DR2: erzeugter Drall
- F: Fluid
- G: Gleichrichter
- L1: erster Leitungsabschnitt / Eingangsabschnitt
- L2: zweiter Leitungsabschnitt / Ausgangabschnitt
- LV: Leitungsverbindungsabschnitt
- LS1: erstes geraden Leitungsstück
- LS2: zweites geraden Leitungsstück
- R1, R2: Richtung des Dralls

## Patentansprüche

1. Durchflussmessvorrichtung (1) zum Messen eines Parameters einer aus einem Fluid (F) gebildeten Strömung, das in einer Leitung (L) in einer Hauptströmungsrichtung strömt, umfassend
einen ersten Leitungsabschnitt (L1) zum Leiten des Fluids aus der Hauptströmungsrichtung;
einen zweiten Leitungsabschnitt (L2) zum Leiten des Fluids zurück in die Hauptströmungsrichtung;
einen Leitungsverbindungsabschnitt (LV) zum Verbinden des ersten Leitungsabschnitts (L1) mit dem zweiten Leitungsabschnitt (L2);
zumindest eine Ultraschalleinrichtung (2) zum Aussenden und/oder Empfangen von Ultraschallwellen; und
eine Auswerteeinheit (2a) zum Durchführen einer Laufzeitdifferenzmessung und zum Bestimmen des Parameters,
wobei der Leitungsverbindungsabschnitt (LV) als ein 180°-Bogen ausgebildet ist und zusammen mit einem ersten und einem zweiten geraden Leitungsstück (LS1, LS2) einen U-förmigen Kanal bildet, wobei das erste gerade Leitungsstück (LS1) sich zwischen dem ersten Leitungsabschnitt (L1) und dem Leitungsverbindungsabschnitt (LV) und das zweite gerade Leitungsstück (LS2) sich zwischen dem Leitungsverbindungsabschnitt (LV) und dem zweiten Leitungsabschnitt (L2) befindet,
**gekennzeichnet durch**
zumindest eine Drallerzeugungseinheit (DE) zum Erzeugen eines Dralls, die nach dem ersten Leitungsabschnitt (L1) und vor einem Gleichrichter (G) derart angeordnet ist, dass der erzeugte Drall (DR2) in eine Richtung (R2) gerichtet ist, die entgegengesetzt zu einer Richtung (R1) eines nach dem ersten Leitungsabschnitt (L1) und vor der Drallerzeugungseinheit (DE) vorhandenen Dralls (DR1) ist, und wobei die Drallerzeugungseinheit (DE) ausgebildet ist, das Fluid (F) gegen die Innenwand des ersten geraden Leitungsstückes (LS1) zu lenken.

2. Durchflussmessvorrichtung (1) nach Anspruch 1, **dadurch gekennzeichnet, dass** die Drallerzeugungseinheit (DE) ein zylindrisches Gehäuse (11) und eine Mehrzahl von im Innern des Gehäuses (11) angeordneten Schaufeln (12) umfasst, wobei die Schaufeln (12) gegenüber dem Gehäuse (11) feststehend sind.

3. Durchflussmessvorrichtung (1) nach Anspruch 1 oder 2, **dadurch gekennzeichnet, dass** die Ultraschalleinrichtung (2) in Strömungsrichtung des Fluids (F) nach der Drallerzeugungseinheit (DE) angeordnet ist.

4. Durchflussmessvorrichtung (1) nach Anspruch 3, **dadurch gekennzeichnet, dass** die Drallerzeugungseinheit (DE) im ersten geraden Leitungsstück (LS1) und die Ultraschalleinrichtung (2) im zweiten geraden Leitungsstück (LS2) angeordnet sind.

5. Durchflussmessvorrichtung (1) nach Anspruch 3 oder 4, **dadurch gekennzeichnet, dass** der U-förmige Kanal von dem ersten Leitungsabschnitt (L1) und dem zweiten Leitungsabschnitt (L2) lösbar befestigt ist.

## Claims

1. A flow measurement apparatus (1) for measuring a parameter of a flow formed from a fluid (F) which flows in a main direction of flow in a line (L), comprising
a first line section (L1) for conducting the fluid out of the main direction of flow;
a second line section (L2) for conducting the fluid back into the main direction of flow;
a line connection section (LV) for connecting the first line section (L1) to the second line section (L2);
at least one ultrasound device (2) for transmitting and/or receiving ultrasound waves; and
an evaluation unit (2a) for carrying out a transit-time difference measurement and for determining the parameter,
wherein the line connection section (LV) is configured as a 180° elbow and forms, together with a first straight line piece and a second straight line piece (LS1, LS2), a U-shaped passage, with the first straight line piece (LS1) being located between the first line section (L1) and the line connection section (LV) and the second straight line piece (LS2) being located between the line connection section (LV) and the second line section (L2),
**characterized by**
at least one swirl generation unit (DE) for generating a swirl which is arranged downstream of the first line section (L1) and upstream of a conditioner (G) such that the generated swirl (DR2) is directed in a direction (R2) which is opposite to a direction (R1) of a swirl (DR1) present downstream of the first line section (L1) and upstream of the swirl generation unit (DE), and wherein the swirl generation unit (DE) is configured to direct the fluid (F) against the inner wall of the first straight line piece (LS1).

2. A flow measurement apparatus (1) in accordance with claim 1,
**characterized in that** the swirl generation unit (DE) comprises a cylindrical housing (11) and a plurality of blades (12) arranged in the interior of the housing (11), with the blades (12) being fixed in position with respect to the housing (11).

3. A flow measurement apparatus (1) in accordance with claim 1 or claim 2,
**characterized in that** the ultrasound device (2) is arranged downstream of the swirl generation unit (DE) in the direction of flow of the fluid (F).

4. A flow measurement apparatus (1) in accordance with claim 3,
**characterized in that** the swirl generation unit (DE) is arranged in the first straight line piece (LS1) and the ultrasound device (2) is arranged in the second straight line piece (LS2).

5. A flow measurement apparatus (1) in accordance with claim 3 or claim 4,
**characterized in that** the U-shaped passage is fastened releasably from the first line section (L1) and from the second line section (L2).

## Revendications

1. Débitmètre (1) destiné à mesurer un paramètre d'un flux formé par un fluide (F) qui s'écoule dans un conduit (L) dans une direction d'écoulement principale, comprenant
une première portion de conduit (L1) pour mener le fluide depuis la direction d'écoulement principale ;
une seconde portion de conduit (L2) pour mener le fluide en retour dans la direction d'écoulement principale ;
une portion de liaison de conduit (LV) pour relier la première portion de conduit (L1) à la seconde portion de conduit (L2) ;
au moins un organe à ultrasons (2) pour émettre et/ou recevoir des ondes ultrasonores ; et
une unité d'évaluation (2a) pour effectuer une mesure de la différence de temps de parcours et pour déterminer le paramètre,
dans lequel la portion de liaison de conduit (LV) est réalisée sous la forme d'un coude de 180° et forme un canal en forme de U conjointement avec une première et une seconde partie de conduit rectiligne (LS1, LS2), dans lequel la première partie de conduit rectiligne (LS1) se trouve entre la première portion de conduit (L1) et la portion de liaison de conduit (LV) et la seconde partie de conduit rectiligne (LS2) se trouve entre la portion de liaison de conduit (LV) et la seconde portion de conduit (L2),
**caractérisé par**
au moins une unité de génération de tourbillonnement (DE) pour générer un tourbillonnement, qui est agencée en aval de la première portion de conduit (L1) et en avant d'un redresseur (G), de telle sorte que le tourbillonnement généré (DR2) est dirigé dans une direction qui est opposée à une direction (R1) d'un tourbillonnement (DR1) existant en aval de la première portion de conduit (L1) et en avant de l'unité de génération de tourbillonnement (DE), et dans lequel l'unité de génération de tourbillonnement (DE) est réalisée pour diriger le fluide (F) contre la paroi intérieure de la première partie de conduit rectiligne (LS1).

2. Débitmètre (1) selon la revendication 1, **caractérisé en ce que** l'unité de génération de tourbillonnement (DE) comprend un boîtier cylindrique (11) et une pluralité de pales (12) agencées à l'intérieur du boîtier (11), les pales (12) étant fixes par rapport au boîtier (11).

3. Débitmètre (1) selon la revendication 1 ou 2, **caractérisé en ce que** l'organe à ultrasons (2) est agencé en aval de l'unité de génération de tourbillonnement (DE) en direction d'écoulement du fluide (F).

4. Débitmètre (1) selon la revendication 3, **caractérisé en ce que** l'unité de génération de tourbillonnement (DE) est agencée dans la première partie de conduit rectiligne (LS1) et l'organe à ultrasons (2) est agencé dans la seconde partie de conduit rectiligne (LS2).

5. Débitmètre (1) selon la revendication 3 ou 4, **caractérisé en ce que** le canal en forme de U est fixé de façon détachable de la première portion de conduit (L1) et de la seconde portion de conduit (L2).
